# EUROPÄISCHE PATENTSCHRIFT

(11) **EP 1 999 375 B1**
(45) Veröffentlichungstag und Bekanntmachung des Hinweises auf die Patenterteilung: **20.04.2011**
(21) Anmeldenummer: 07704626.6
(22) Anmeldetag: 19.02.2007
(51) Int. Cl.: F04D 17/12, F04D 25/06, F04D 29/58, H02K 9/00

(54) **VERDICHTEREINHEIT**
COMPRESSOR UNIT
UNITÉ DE COMPRESSION

(30) Priorität: 24.03.2006 EP 06006066
(43) Veröffentlichungstag der Anmeldung: 10.12.2008
(73) Patentinhaber: SIEMENS AKTIENGESELLSCHAFT, 80333 München (DE)
(72) Erfinder: NIJHUIS, Theo, NL-7595 Weerselo (NL)
(86) Internationale Anmeldenummer: PCT/EP2007/051539
(87) Internationale Veröffentlichungsnummer: WO 2007/110281

(56) Entgegenhaltungen:
- EP-A1- 1 482 179
- EP-A2- 1 069 313
- WO-A-00/22358
- WO-A1-2005/003512
- DE-A1- 3 642 726
- DE-A1- 19 623 553

## Beschreibung

Die Erfindung betrifft eine Verdichtereinheit zum Verdichten eines Fördermediums, insbesondere für den Unterwasserbetrieb, umfassend einen Verdichter und einen elektrischen Motor, welcher einen Stator und einen Rotor umfasst.

Jüngste Entwicklungen im Bereich des Verdichterbaus konzentrieren sich auch auf Unterseeanordnungen großer Verdichter, welche der Förderung von Erdgasen dienen sollen. Aufgrund der besonderen Betriebsbedingungen, insbesondere wegen der stark eingeschränkten Zugänglichkeit sowohl zu Wartungszwecken als auch mittels Versorgungsleitungen sieht sich die Fachwelt vor große Herausforderungen gestellt. Einschlägige Umweltbestimmungen verbieten jeglichen stofflichen Austausch zwischen den zu installierenden Aggregaten und dem umgebenden Seewasser. Hinzu kommt, dass Seewasser ein aggressives Medium ist und in den verschiedenen Meerestiefen extreme Druck- und Temperaturbedingungen anzutreffen sind. Eine weitere Anforderung besteht darin, dass die Aggregate einerseits eine äußerst hohe Standzeit aufweisen sollen und andererseits nahezu wartungsfrei ausgebildet sein müssen. Erschwerend ist zusätzlich eine nicht unerhebliche Verschmutzung des teilweise chemisch aggressiven zu fördernden Mediums.

Eine Verdichtereinheit der vorgenannten Art ist bereits aus der internationalen Patentanmeldung WO 02/099286 A1 bekannt. Die dort beschriebene Verdichtereinheit sieht zur Kühlung vor, dass aus dem Fördermedium, meist Erdgas, im Bereich einer Überströmung der radialen Stufen des Verdichters eine Teilmenge abgezweigt wird und, mittels welcher die zu kühlenden Bauelemente umspült werden, so dass die Verlustwärme, die eine Größenordnung von 100 - 200 kW aufweist, mit dem kalten zu fördernden Medium abgeführt wird.

Aus der EP 1 069 313 A2 ist bereits eine Verdichtereinheit der eingangs genannten Art bekannt, deren Elektromotor eine separate Kühlung aufweist, die mit Stickstoff als Kühlmedium betrieben wird, welches gasförmig mittels einer zusätzlich antreibenden Vorrichtung im Kreislauf gefördert wird.

Aus der DE 196 23 553 A1, die als nächstliegender Stand der Technik angesehen wird, ist bereits eine Fluidenergiemaschine bekannt, bei der ein Kühlmedium mittels einer Pumpe im Zwangsumlauf gefördert wird.

Dieses Konzept zur Kühlung der Verdichtereinheit ist insbesondere deshalb vorteilhaft, da zum Abfuhr der Verlustwärme das ohnehin zu transportierende Fördermedium genutzt wird und kein zusätzlicher Medienäustausch zwischen der Verdichtereinheit und weiteren Komponenten der Umgebung erfolgen muss. Besondere Schwierigkeiten bringt dieses Vorgehen jedoch aufgrund der aggressiven chemischen Eigenschaften der zu fördernden Medien mit sich. Während eine umspülende Kühlung des Rotors ausreichend ist, sind für den Stator weitere Kühlmaßnahmen erforderlich, um die Verlustwärme abzuführen.

Ein weiteres Risiko liegt in der regelmäßig porösen Isolierung des Stators, welche im Bereich einer Umspülung mittels des als Kühlmedium mit dem Stator in Kontakt tretenden Fördermediums dieses teilweise absorbiert, so dass es bei einem plötzlichen Druckabfall, beispielsweise bei einer Unterbrechung des Betriebes, zu explosionsartigen Expansionen des absorbierten Mediums in den Poren der Isolation kommt, die infolgedessen zerstört wird.

Die beschriebenen Nachteile mit ihren hohen Risiken für die Verfügbarkeit einer Verdichtereinheit sind insbesondere für den Unterwasserbetrieb, beispielsweise bei der Erdgasförderung, inakzeptabel.

Die Erfindung hat es sich daher zur Aufgabe gemacht, eine Kühlung für den Stator eines Elektromotors einer motorbetrieben Verdichtereinheit, insbesondere für den Unterseebetrieb, zu schaffen, die einerseits eine hervorragende Betriebssicherheit bietet und andererseits keinen stofflichen Austausch mit der Umgebung während des Betriebes erfordert.

Zur Lösung wird eine Verdichtereinheit nach Anspruch 1 vorgeschlagen. Die Unteransprüche beinhalten jeweils vorteilhafte Weiterbildungen der Erfindung.

Ein entscheidender Vorteil der erfindungsgemäßen Verdichtereinheit liegt darin, dass die gesonderte Kühlung des Stators genau auf die Betriebsbedingungen desselben abgestimmt werden kann und insbesondere einerseits die hohe Verlustleistung und andererseits die Empfindlichkeit dieses Bauteils berücksichtigt werden kann.

Insbesondere der Empfindlichkeit des Stators gegen Verschmutzung wird Rechnung getragen, wenn die Kühlung einen geschlossenen Kreislauf aufweist, in dem ein Kühlmedium umläuft. Eine zweckmäßige Weiterbildung der Erfindung sieht vor, dass der Stator mit Kühlkanälen versehen ist und das Fördermedium zur Kühlung diese Kanäle durchströmt. Diese Ausbildung birgt bei einer Kühlung mittels des Fördermediums das Risiko, dass die Verschmutzungen des Fördermediums im Laufe des Betriebes die Strömung durch die Kanäle beeinträchtigen und diese gegebenenfalls auch verstopfen. Aufgrund des erfindungsgemäßen gesonderten Kreislaufs ist die Statorkühlung betriebssicher.

Es ist sinnvoll, wenn die Kühlung einen Kondensator aufweist, welcher mittels einer Vorlaufleitung und einer Rücklaufleitung mit dem gekühlten Stator in Verbindung steht, wobei die Kühlung derart ausgebildet ist, dass das Kühlmedium zwischen dem Kondensator, der Rücklaufleitung, dem Stator und der Vorlaufleitung zirkuliert. Die Zirkulation kann besonders vorteilhaft mittels natürlicher Konfektion angetrieben sein, so dass sich ein Naturumlauf zwischen den vorgenannten Bauelementen des Kühlmediums ergibt. Auf diese Weise können zusätzliche Fördervorkehrungen für das Kühlmedium eingespart werden, was die Komplexität der Verdichtereinheit reduziert und auf diese Weise zu einer hohen Verfügbarkeit beiträgt. Um einen besonders weiten thermischen Einsatzbereich zu gewährleisten, kann der Umlauf der Kühlung auch mittels einer Pumpe angetrieben sein, so dass stets ein Zwangsumlauf entsteht.

Besonders zweckmäßig ist das Kühlmedium derart ausgebildet, dass in dem Umlauf der Kühlung ein Phasenwechsel zumindest eines Teiles des Kühlmediums erfolgt. Auf diese Weise ist die Kühlleistung besonders hoch. In dem geschlossenen Kreislauf kann der Druck der Befüllung des Kühlmediums so eingestellt werden, dass bei Betriebsbedingungen während der Wärmeaufnahme in dem Stator zumindest einen Teil des Kühlmediums in die Gasphase übergeht und während der Wärmeabgabe in dem Kondensator dieser Teil wieder in die Flüssigphase wechselt.

Eine gute Eignung als Kühlmedium weisen Ammoniak, Kohlendioxid und Kohlenwasserstoffe auf. Die Kohlenwasserstoffe können sowohl halogeniert als auch nicht halogeniert sein, wobei die nicht halogenierten Kohlenwasserstoffe ebenso wie Ammoniak, Kohlendioxid aus Umweltverträglichkeitsgründen gegenüber den halogenierten Wasserstoffen vorteilhaft sind.

Besonders zweckmäßig im Sinne der Erfindung sind einerseits eine gesonderte Kühlung für den Stator des elektrischen Motors der Verdichtereinheit und andererseits ein Kühlsystem für die weiteren Elemente der Verdichtereinheit. Die Trennung der Kühlung von dem Kühlsystem wird den besonderen Anforderungen an die Wärmeabfuhr aus dem Stator einer gattungsgemäßen Verdichtereinheit gerecht.

Das Kühlsystem, welches unter anderem den Verdichter und auch den Rotor des Motors kühlt, sieht als Kühlmedium besonders vorteilhaft das Fördermedium vor, so dass die Verlustwärme mit dem zu verdichtenden Fördermedium abgeführt wird. Dies ist besonders bei der Unterseeförderung von Erdgas zweckmäßig, da dieses regelmäßig verhältnismäßig kalt ist.

Insbesondere der Rotor kann sinnvoll von dem Fördermedium in dem offenen Kreislauf umspült werden.

Häufig ist das Fördermedium stark verschmutzt und kann empfindliche Bauteile aufgrund der Umspülung in ihrer Funktion beeinträchtigen. Daher ist es sinnvoll die Lager des Rotors, nämlich die Axiallager und die Radiallager gekapselt auszubilden, so dass kein stofflicher Austausch zwischen der Umgebung und diesen Bauteilen stattfindet. Dadurch bedingt müssen Magnetlager eingesetzt werden. Gleiches gilt für den Rotor und den Stator, die in ähnlicher Weise mittels einer Kapselung gegen die aggressiven Fördermedien geschützt werden können.

Damit nicht kostenintensiv die Kühlung des Stators für die maximale Druckdifferenz - resultierend einerseits aus dem außen anstehenden Druck des kühlenden Fördermediums, welches im Umgebungsbereichs des Stators zur Kühlung der übrigen Bauelemente der Verdichtereinheit mittels des Kühlsystems verwendet wird, und andererseits dem Innendruck der Kühlungausgelegt werden muss, ist es sinnvoll, für verschiedene Drücke aus dem Fördermedium unterschiedliche Betriebsdrücke der Kühlung vorzusehen und in Abhängigkeit von dem Betriebsdruck das Kühlmedium der Kühlung zu wechseln. In konkreter Anwendung bei der Förderung von Erdgas bedeutet dies, dass der Druck des Fördermediums am Einlass zwischen 40 bar und 140 bar je nach Größe und Ausbeutung des Vorkommens variieren kann und daher die Kühlung auf einen Differenzdruck von bis zu 200 bar ausgelegt sein sollte, wenn mit lediglich demselben Kühlmedium die Kühlung über die gesamte Zeit der Förderung des Erdgases betrieben wird. Vorteilhaft wird die Auslegung auf eine nur reduzierte Druckdifferenz möglich, wenn in Abhängigkeit von dem Druck des Fördermediums das Kühlmedium gewechselt wird, beispielsweise in der Reihenfolge Propan, Butan, Freon. Der Wechsel des Kühlmediums kann mit Vorteil synchron mit anderen Wartungsarbeiten erfolgen.

Im Folgenden wird die Erfindung anhand eines speziellen Ausführungsbeispiels unter Bezugnahme auf Zeichnungen näher erläutert. Es zeigen:
- Figur 1: eine schematische Darstellung eines Längsschnitts durch eine erfindungsgemäße Verdichtereinheit und
- Figur 2: eine schematische Darstellung des Motors der Verdichtereinheit mit der gesonderten Kühlung als Thermosiphon.

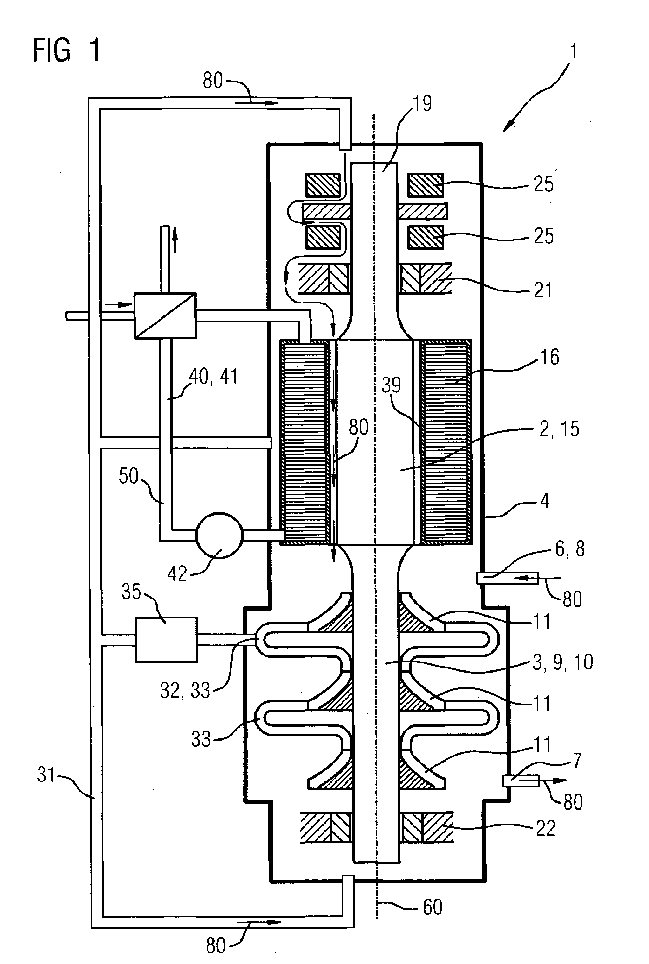

Figur 1 zeigt schematisch einen Schnitt längs einer erfindungsgemäßen Verdichtereinheit 1, welche als wesentliche Bauteile einen Motor 2 und einen Verdichter 3 in einem gasdicht ausgebildeten Gehäuse 4 aufweist. Das Gehäuse 4 beherbergt den Motor 2 und den Verdichter 3. Im Bereich des Übergang von dem Motor 2 zu dem Verdichter 3 ist das Gehäuse 4 mit einem Einlass 6 und einem Auslass 7 versehen, wobei durch den Einlass 6 mittels eines Ansaugstutzens 8 das zu verdichtende Fluid angesaugt wird und durch den Auslass 7 das verdichtete Fluid abströmt.

Die Verdichtereinheit 1 ist im Betrieb vertikal angeordnet, wobei ein Motorrotor 15 des Motors 2 über einem Verdichterrotor 9 des Verdichters 3 zu einer gemeinsamen Welle 19 vereint sind, die sich um eine gemeinsame vertikale Drehachse 60 dreht.

Der Motorrotor 15 ist in einem ersten Radiallager 21 am oberen Ende des Motorrotors 15 gelagert.

Der Verdichterrotor 9 ist mittels eines zweiten Radiallagers 22 in unterer Position gelagert.

Am oberen Ende der gemeinsamen Welle 19 - also am oberen Ende des Motorrotors 15 - ist ein Axiallager 25 vorgesehen. Die Radiallager und das Axiallager arbeiten elektromagnetisch und sind jeweils gekapselt ausgeführt. Die Radiallager erstrecken sich hierbei in Umfangsrichtung um die jeweilige Lagerstelle der Welle 19 und sind hierbei 360° umlaufend und ungeteilt ausgebildet.

Der als Zentrifugalverdichter ausgebildete Verdichter 3 weist drei Verdichterstufen 11 auf, die jeweils mittels einer Überströmung 33 in Verbindung stehen. Die sich an den Verdichterstufen 11 ergebenen Druckdifferenzen sorgen für einen Schub an dem Verdichterrotor 9, der sich auf dem Motorrotor 15 überträgt und entgegen der Gewichtskraft des sich ergebenden gesamten Rotors aus Verdichterrotor 9 und Motorrotor 15, gerichtet ist, so dass ein im Nennbetrieb weitestgehender Schubausgleich erfolgt. Auf diese Weise kann das Axiallager 25 vergleichsweise kleiner dimensioniert sein als bei einer horizontalen Anordnung der Drehachse 60.

Die elektromagnetischen Lager 21, 22, 25 sind mittels eines Kühlsystems 31 auf Betriebstemperatur gekühlt, wobei das Kühlsystem 31 eine Anzapfung 32 in einer Überströmung des Verdichters 3 vorsieht. Von der Anzapfung 32 wird mittels Rohrleitungen ein Teil des Fördermediums, welches vorzugsweise Erdgas ist, durch einen Filter 35 geleitet und anschließend durch zwei separate Rohrleitungen zu den jeweils äußeren Lagerstellen (erstes Radiallager 21 und zweites Radiallager 22 sowie Axiallager 25) geführt. Diese Kühlung mittels des kalten Fördermediums erspart zusätzliche Versorgungsleitungen.

Der Motorrotor 15 ist von einem Stator 16 umgeben, der eine Kapselung 39 aufweist, so dass das aggressive Fördermedium Wicklungen des.Stators 16 nicht beschädigt. Die Kapselung ist hierbei bevorzugt so ausgelegt, dass sie den vollen Betriebsdruck zu ertragen vermag. Dies auch deshalb, weil eine separate Stator-Kühlung 40 für den Stator vorgesehen ist, in der ein eigenes-Kühlmedium zirkuliert. Eine Pumpe 42 sorgt hierbei, den Naturumlauf unterstützend für ein Kreislauf über einen Wärmetauscher 43.

Zumindest ist die Kapselung 39 derart ausgeführt, dass der Abschnitt, der sich zwischen dem Stator 16 und dem Motorrotor 15 erstreckt zwar eine dünne Wandstärke aufweist jedoch bei einer vollständigen Füllung der Statorkühlung 40 mittels des Kühlmediums in der Lage ist, dem Auslegedruck Stand zu halten. Auf diese Weise werden größere Wirbelstromverluste in diesem Bereich vermieden und der Wirkungsgrad der Gesamtanordnung verbessert sich.

Abhängig von dem Druck des Fördermediums kann die Füllung bzw. das Kühlmedium der Stator-Kühlung 40 im Druck angepasst werden, so dass die Kapselung stets im Auslegebereich der Druckdifferenz betrieben wird. Entsprechend kann bei Wartungsarbeiten das Kühlmedium gewechselt werden, beispielsweise in der Reihenfolge fallenden Druck von Propan nach Butan nach Freon.

Der Verdichterrotor 9 weist zweckmäßig eine Verdichterwelle 10 auf, auf der die einzelnen Verdichterstufen 11 montiert sind. Dies kann bevorzugt mittels einer thermischen Schrumpfpassung erfolgen. Ebenso ist ein Formschluss, beispielsweise mittels Polygonen möglich. Eine andere Ausführungsform sieht eine Schweißung verschiedener Verdichterstufen 11 an einander vor, aus der ein einstückiger Verdichterrotor 9 resultiert.

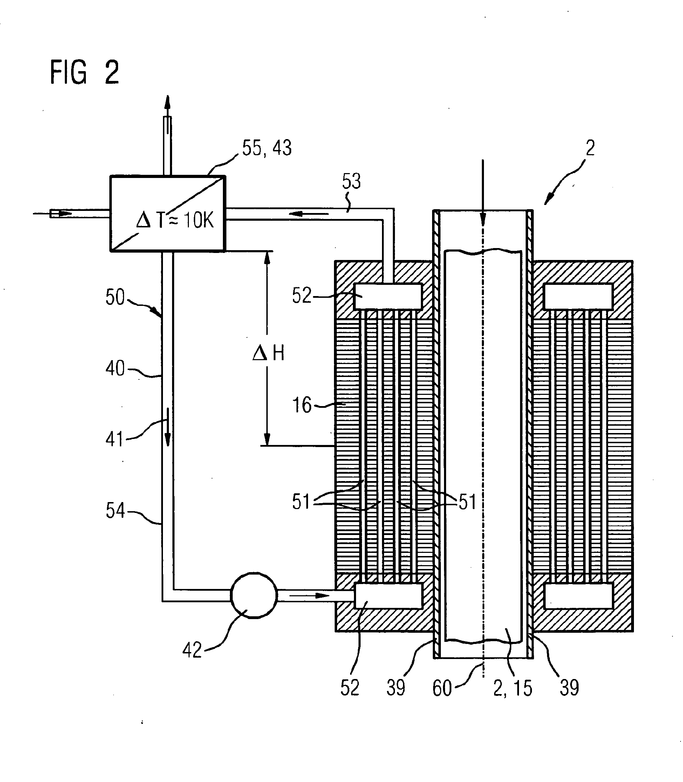

Figur 2 zeigt den Motorrotor 15, den Stator 16 und die Kühlung 40. Die Kühlung 40 weist einen Kühlkreislauf 50 auf, welcher sich durch Kühlkanäle 51, beidseitig der Kühlkanäle 51 angeordnete Sammelräume 52 sich in diese Sammelräume anschließende Leitungen, nämlich eine Vorlaufleitung 53 und eine Rücklautleitung 54 sowie zwischen der Vorlaufleitung 53 und der Rücklaufleitung 54 angeordneten Kondensator 55 erstreckt. Das Kühlmedium , .beispielsweise ein Kohlenwasserstoff, strömt beginnend in Kühlkanälen 51 des Stators 16, durch die Vorlaufleitung 53 in den Kondensator 55, wo das Kühlemedium kondensiert und anschließend als Flüssigkeit durch die Rücklaufleitung 54 in einen am rücklaufseitigen Ende der Kühlkanäle 51 befindlichen Sammelraum 52 einströmt. Der Kreislauf ist geschlossen und der Druck bzw. die Füllmenge ist so gewählt, dass ein Phasenwechsel zwischen Vor- und Rücklauf erfolgt. Vorzugsweise ist die Temperaturdifferenz zwischen Vor- und Rücklauf 10K. Der Kondensator befindet sich geodätisch am höchsten Punkt (Höhendifferen ΔH), so dass ein Naturumlauf möglich ist. Unterstützend kann eine Pumpe 42 im Rücklauf angeordnet sein. Der Stator ist gekapselt und in einem Spalt zwischen dem Rotor 15 und dem Stator 16 erfolgt eine Kühlung mittels des Fördermediums 80, das den Rotor 15 umspült.

## Patentansprüche

1. Einheit für den Unterwasserbetrieb umfassend einen elektrischen Motor (2), welcher einen Stator (16) und einen Rotor (15) umfasst, wobei der Stator (16) des Motors (2) mit einer gesonderten Kühlung (40) in Verbindung steht und mittels der gesonderten Kühlung (40) gekühlt wird, wobei die Kühlung (40) derart ausgebildet ist, dass unter Betriebsbedingungen ein Naturumlauf eines Kühlmediums in der Kühlung (40) des Stators (16) erfolgt,
**dadurch gekennzeichnet, dass**
die Einheit eine Verdichtereinheit (1) zum Verdichten eines Fördermediums ist,
umfassend einen Verdichter (3)
wobei die Kühlung (40) einen Kondensator (55) aufweist, welcher mittels mindestens einer Vorlaufleitung (53) und mindestens einer Rücklaufleitung (54) mit dem gekühlten Stator (16) in Verbindung steht,
wobei die Kühlung (40) derart ausgebildet ist, dass das Kühlmedium zwischen dem Kondensator (55), der Rücklaufleitung (54), dem Stator (16) und der Vorlaufleitung (53) zirkuliert.

2. Verdichtereinheit (1) nach Anspruch 1,
**dadurch gekennzeichnet, dass**
die Kühlung (40) einen geschlossenen Kreislauf aufweist, in dem das Kühlmedium umläuft.

3. Verdichtereinheit (1) nach einem der vorherigen Ansprüche,
**dadurch gekennzeichnet, dass**
in der Rücklaufleitung (54) eine Pumpe (42) vorgesehen ist, welche das Kühlmedium fördert, so dass ein Zwangsumlauf erfolgt.

4. Verdichtereinheit (1) nach einem der vorherigen Ansprüche,
**dadurch gekennzeichnet, dass**
das Kühlmedium derart ausgebildet ist, dass insbesondere in dem geschlossenen Kreislauf bei den Betriebsbedingungen unter Betriebsdruck in dem Umlauf ein Phasenwechsel des Kühlmediums zumindest teilweise erfolgt, nämlich während der Wärmeaufnahme im Stator (16) das Kühlmedium in die Gasphase übergeht und während der Wärmeabgabe in dem Kondensator (55) das Kühlmedium in die Flüssigphase übergeht.

5. Verdichtereinheit (1) nach einem der vorherigen Ansprüche,
**dadurch gekennzeichnet, dass**
das Kühlmedium (56) ein Kohlenwasserstoff ist.

6. Verdichtereinheit (1) nach Anspruch 1,
**dadurch gekennzeichnet, dass**
der Verdichter (3), Lager der Verdichtereinheit (1) und der Rotor (15) des Motors (2) mit einem weiteren Kühlsystem in Verbindung stehen und mittels dieses Kühlsystems gekühlt werden.

7. Verdichtereinheit (1) nach einem der vorherigen Ansprüche,
**dadurch gekennzeichnet, dass**
das Kühlsystem (31) ein Kühlmedium aufweist, welches das Fördermedium ist.

8. Verdichtereinheit (1) nach einem der vorherigen Ansprüche, **dadurch gekennzeichnet, dass**
das Fördermedium Erdgas ist.

9. Verdichtereinheit (1) nach einem der vorherigen Ansprüche,
**dadurch gekennzeichnet, dass**
das Kühlsystem (31) derart ausgebildet ist, dass der Motorrotor (15) von dem Kühlmedium umspült wird.

10. Verdichtereinheit (1) nach einem der vorherigen Ansprüche 7 bis 9,
**dadurch gekennzeichnet, dass**
Wandungen der Kühlung(40) an das kühlende Fördermedium angrenzen und für einen maximalen Differenzdruck zwischen dem Druck des Fördermediums und dem Druck des Kühlmediums (41) über alle Betriebszustände ausgelegt ist.

11. Verdichtereinheit (1) nach einem der vorherigen Ansprüche 7 bis 9,
**dadurch gekennzeichnet, dass**
Wandungen der Kühlung(40) an das kühlende Fördermedium angrenzen und nicht für einen maximalen Differenzdruck zwischen dem Druck des Fördermediums und dem Druck des Kühlmediums über alle Betriebszustände ausgelegt ist und in Abhängigkeit von dem Druck des Fördermediums der Druck des Kühlmediums erhöht oder erniedrigt wird.

12. Verfahren zum Betrieb einer Verdichtereinheit (1) nach einem der vorherigen Ansprüche,
**dadurch gekennzeichnet, dass**
bei einer Veränderung des Drucks des Fördermediums am Einlass (6) das Kühlmedium der Kühlung (40) gewechselt wird und bei sinkendem Druck des Fördermediums am Einlass (6) auch der Betriebsdruck des Kühlmediums der Kühlung (40) reduziert wird.

13. Verfahren nach Anspruch 12, **dadurch gekennzeichnet, dass** bei Wechsel des Betriebsdrucks des Kühlmediums das Kühlmedium gegen ein anderes getauscht wird.

## Claims

1. Unit for underwater operation, comprising an electric motor (2) which comprises a stator (16) and a rotor (15), with the stator (16) of the motor (2) being connected to a separate cooling arrangement (40) and being cooled by means of the separate cooling arrangement (40), with the cooling arrangement (40) being designed such that a cooling medium naturally circulates in the cooling arrangement (40) of the stator (16) in operating conditions, **characterized in that** the unit is a compressor unit (1) for compression of a pumping medium, comprising a compressor (3), with the cooling arrangement (40) having a condenser (55) which is connected to the cooled stator (16) by means of at least one feed line (53) and at least one return line (54), with the cooling arrangement (40) being designed such that the cooling medium circulates between the condenser (55), the return line (54), the stator (16) and the feed line (53).

2. Compressor unit (1) according to Claim 1, **characterized in that** the cooling arrangement (40) has a closed circuit in which the cooling medium circulates.

3. Compressor unit (1) according to one of the preceding claims, **characterized in that** a pump (42) is provided in the return line (54) and pumps the cooling medium such that a forced circulation is produced.

4. Compressor unit (1) according to one of the preceding claims, **characterized in that** the cooling medium is in such a form that a phase change of the cooling medium takes place, at least partially, in the circulation in particular in the closed circuit in the operating conditions and at the operating pressure, specifically with the cooling medium changing to the gas phase during the heat absorption in the stator (16), and with the cooling medium changing to the liquid phase during the heat emission in the condenser (55).

5. Compressor unit (1) according to one of the preceding claims, **characterized in that** the cooling medium (56) is a hydrocarbon.

6. Compressor unit (1) according to Claim 1, **characterized in that** the compressor (3), the bearings of the compressor unit (1) and the rotor (15) of the motor (2) are connected to a further cooling system and are cooled by means of this cooling system.

7. Compressor unit (1) according to one of the preceding claims, **characterized in that** the cooling system (31) has a cooling medium which is the pumping medium.

8. Compressor unit (1) according to one of the preceding claims, **characterized in that** the pumping medium is natural gas.

9. Compressor unit (1) according to one of the preceding claims, **characterized in that** the cooling system (31) is designed such that the cooling medium flows around the motor rotor (15).

10. Compressor unit (1) according to one of the preceding Claims 7 to 9, **characterized in that** walls of the cooling arrangement (40) are adjacent to the cooling pumping medium and are designed for a maximum differential pressure between the pressure of the pumping medium and the pressure of the cooling medium (41) in all operating states.

11. Compressor unit (1) according to one of the preceding Claims 7 to 9, **characterized in that** walls of the cooling arrangement (40) are adjacent to the cooling pumping medium and are not designed for a maximum differential pressure between the pressure of the pumping medium and the pressure of the cooling medium in all operating states, and the pressure of the cooling medium is increased or decreased as a function of the pressure of the pumping medium.

12. Method for operation of a compressor unit (1) according to one of the preceding claims, **characterized in that**, when the pressure of the pumping medium at the inlet (6) varies, the cooling medium in the cooling arrangement (40) is changed, and when the pressure of the pumping medium at the inlet (6) falls, the operating pressure of the cooling medium in the cooling arrangement (40) is also reduced.

13. Method according to Claim 12, **characterized in that**, when the operating pressure of the cooling medium changes, the cooling medium is replaced by a different one.

## Revendications

1. Groupe pour le fonctionnement sous l'eau, comprenant un moteur ( 2 ) électrique qui comprend un stator ( 16 ) et un rotor ( 15 ), le stator ( 16 ) du moteur ( 2 ) étant liaison avec un refroidissement ( 40 ) qui lui est propre et étant refroidi au moyen du refroidissement ( 40 ) qui lui est propre, le refroidissement ( 40 ) étant tel que, dans les conditions de fonctionnement, une circulation naturelle d'un fluide de refroidissement a lieu dans le refroidissement ( 40 ) du stator ( 16 ),
**caractérisé en ce que**
le groupe est un groupe ( 1 ) compresseur pour comprimer un fluide véhiculé ( 56 ),
comprenant un compresseur ( 3 ),
le refroidissement ( 40 ) comportant un condenseur ( 55 ) qui communique, au moyen d'au moins un conduit ( 53 ) primaire et d'au moins un conduit ( 54 ) de retour, avec le stator ( 16 ) refroidi,
dans lequel le refroidissement ( 40 ) est tel que le fluide de refroidissement circule entre le condenseur ( 55 ), le conduit ( 54 ) de retour, le stator ( 16 ) et le conduit ( 53 ) primaire.

2. Groupe ( 1 ) compresseur suivant la revendication 1, **caractérisé en ce que**
le refroidissement ( 40 ) comporte un circuit fermé, dans lequel passe le fluide de refroidissement.

3. Groupe ( 1 ) compresseur suivant l'une des revendications précédentes,
**caractérisé en ce que**
dans le conduit ( 54 ) de retour est prévu une pompe ( 42 ) qui véhicule le fluide de refroidissement, de manière à effectuer une circulation forcée.

4. Groupe ( 1 ) compresseur suivant l'une des revendications précédentes,
**caractérisé en ce que**
le fluide de refroidissement est tel que, notamment dans le circuit fermé, lors des conditions de fonctionnement sous une pression de fonctionnement, dans la circulation a lieu au moins en partie un changement de phase du fluide de refroidissement, à savoir pendant l'absorption de chaleur dans le stator ( 16 ), le fluide de refroidissement passe en phase gazeuse et, pendant que la chaleur est cédée dans le condenseur ( 55 ), le fluide de refroidissement passe en phase liquide.

5. Groupe ( 1 ) compresseur suivant l'une des revendications précédentes,
**caractérisé en ce que**
le fluide ( 56 ) de refroidissement est un hydrocarbure.

6. Groupe ( 1 ) compresseur suivant la revendication 1,
**caractérisé en ce que**
le compresseur ( 3 ), des paliers du groupe ( 1 ) compresseur et le rotor ( 15 ) du moteur ( 2 ) sont en liaison avec un autre système de refroidissement et sont reliés au moyen de ce système de refroidissement.

7. Groupe ( 1 ) compresseur suivant l'une des revendications précédentes,
**caractérisé en ce que**
le système ( 31 ) de refroidissement comporte un fluide de refroidissement qui est le fluide véhiculé.

8. Groupe ( 1 ) compresseur suivant l'une des revendications précédentes,
**caractérisé en ce que**
le fluide véhiculé est du gaz naturel.

9. Groupe ( 1 ) compresseur suivant l'une des revendications précédentes,
**caractérisé en ce que**
le système ( 31 ) de refroidissement est tel que le fluide de refroidissement passe sur le rotor ( 15 ) du moteur en le lavant.

10. Groupe ( 1 ) compresseur suivant l'une des revendications précédentes 7 à 9,
**caractérisé en ce que**
des parois du refroidissement ( 40 ) sont voisines du fluide véhiculé de refroidissement et il est conçu pour une différence de pression maximum entre la pression du fluide véhiculé et la pression du fluide ( 41 ) de refroidissement dans tous les états de fonctionnement.

11. Groupe ( 1 ) compresseur suivant l'une des revendications précédentes 7 à 9,
**caractérisé en ce que**
des parois du refroidissement ( 40 ) sont voisines du fluide véhiculé de refroidissement et il n'est pas conçu pour une différence de pression maximum entre la pression du fluide véhiculé et la pression du fluide de refroidissement dans tous les états de fonctionnement et augmente ou diminue la pression du fluide de refroidissement en fonction de la pression du fluide véhiculé.

12. Procédé pour faire fonctionner un groupe ( 1 ) compresseur suivant l'une des revendications précédentes,
**caractérisé en ce que**
s'il se produit une variation de la pression du fluide véhiculé à l'entrée ( 6 ), on change le fluide de refroidissement du refroidissement ( 40 ) et s'il se produit un abaissement de la pression du fluide véhiculé à l'entrée ( 6 ), on réduit aussi la pression de fonctionnement du fluide de refroidissement du refroidissement ( 40 ).

13. Procédé suivant la revendication 12, **caractérisé en ce que** lorsque l'on change la pression de fonctionnement du fluide de refroidissement, on remplace le fluide de refroidissement par un autre.
